# EUROPÄISCHE PATENTSCHRIFT

(11) **EP 3 029 787 B1**
(45) Veröffentlichungstag und Bekanntmachung des Hinweises auf die Patenterteilung: **13.07.2022**
(21) Anmeldenummer: 15196751.0
(22) Anmeldetag: 27.11.2015
(51) Int. Cl.: H02B 1/30

(54) **SCHALTSCHRANKGEHÄUSE UND VERFAHREN ZUR FERTIGUNG EINES SCHALTSCHRANKGEHÄUSES**
SWITCHBOARD ENCLOSURE AND METHOD FOR PRODUCING SAME
BOITIER D'ARMOIRE ÉLECTRIQUE ET PROCÉDÉ DE FABRICATION D'UN BOÎTIER D'ARMOIRE ÉLECTRIQUE

(30) Priorität: 05.12.2014 DE 102014117970
(43) Veröffentlichungstag der Anmeldung: 08.06.2016
(73) Patentinhaber: ABB Schweiz AG, 5400 Baden (CH)
(72) Erfinder: Roth, Michael, 77880 Sasbach (DE); Kilgus, Kai, 76593 Gemsbach (DE); Hörth, Arnold, 77836 Rheinmünster-Schwarzach (DE); Armbruster, Manfred, 77855 Achern (DE)
(74) Vertreter: Maiwald Patent- und Rechtsanwaltsgesellschaft mbH

(56) Entgegenhaltungen:
- EP-A1- 1 111 979
- EP-A1- 1 626 471
- EP-A1- 2 395 616
- EP-A2- 0 319 483
- DE-A1- 1 936 738
- DE-B3-102008 048 863
- DE-T2- 68 927 213
- DE-U- 1 787 286
- DE-U- 1 864 370
- DE-U- 1 964 260
- DE-U1- 9 106 011

## Beschreibung

Die Erfindung betrifft ein Schaltschrankgehäuse mit mindestens einer Rückwand, einer Bodenwand, einer Deckwand und mindestens zwei Seitenwänden. Die Erfindung betrifft außerdem ein Verfahren zur Fertigung des erfindungsgemäßen Schaltschrankgehäuses.

Im Stand der Technik werden die Wände derartiger Schaltschränke an ihren Kanten miteinander verschweißt. Es sind Schaltschrankgehäuse bekannt, die aus Schwarzblech, das heißt ohne vorherige Beschichtung, auf Stanz-Biegemaschinen und Profilieranlagen mit bekannten Fertigungsmethoden hergestellt werden. Die dabei entstehenden Schnittkanten werden durch das nachträgliche Beschichten der Oberfläche abgedeckt.

Die DE 9196911 U1 zeigt ein Schaltschrankgehause zur Aufnahme von an Montageplatten und/oder Gerateschienen anzuschließenden elektrischen und elektronischen Baugruppen, mit einer Rückwand, zwei Seitenwanden und einer als Rahmen zum Anschluss für eine Schranktür ausgebildeten Vorderwand, die gemeinsam den Gehausemantel bilden, sowie mit den Gehausemantel oben und unten stirnseitig schließenden Flanschplatten, dadurch gekennzeichnet, dass der Gehausemantel aus einem einstückigen Blechzuschnitt, der die Rückwand, die Seitenwande und die vertikalen, an die Seitenwände anschließenden Teile des die Vorderwand bildenden Rahmens umfasst, sowie aus zwei fest damit verbundenen, die horizontalen Teile des Rahmens bildenden und jeweils aus einstückigen Blechzuschnitten bestehenden Profilschienen besteht, wobei die Blechzuschnitte an den die Stirnseiten des Gehausemantels bildenden Rändern mit laschenartigen Leisten versehen sind, die U-profilförmig ins Innere des Gehäusemantels abgekantete Anschlussprofile bilden und mit Aussparungen versehen sind, die zur Aufnahme von Befestigungsmitteln für die Flanschplatten und die Montageplatten bzw. Geräteschienen dienen.

Nachteilig an den bekannten Schaltschrankgehäusen und dem entsprechenden Herstellungsverfahren ist dabei jedoch ein vergleichsweise hoher Fertigungsaufwand, da zahlreiche Einzelteile miteinander zu verschweißen und nachträglich zu Beschichten sind, wobei durch das nachträgliche Beschichten der Oberfläche zumindest ein zusätzlicher Arbeitsgang erforderlich ist.

Ausgehend von diesem Stand der Technik ist es Aufgabe der Erfindung ein Schaltschrankgehäuse anzugeben, welches vergleichsweise einfach zu fertigen ist und bei welchem ein nachträgliches Beschichten der Gehäuseteile vermieden ist. Des Weiteren ist es Aufgabe der Erfindung ein diesbezügliches Verfahren zum Fertigen des Schaltschrankgehäuses anzugeben.

Diese Aufgabe wird gelöst durch ein Schaltschrankgehäuse der eingangs genannten Art mit den Merkmalen des Anspruchs 1. Dieses Schaltschrankgehäuse zeichnet sich unter anderem dadurch aus, dass
▪ die Rückwand und die Seitenwände aus einem vorbeschichteten U-förmig gebogenen Blech mit nach innen gebogenen umlaufenden Schnittkanten einstückig ausgebildet sind,
▪ die Boden- und die Deckwand so mit dem U-förmig gebogenen Blech verbunden sind, dass die Schnittkanten und/oder die jeweilige boden- und deckwandseitige Kante, verdeckt oder überdeckt ist.

Die Grundidee der Erfindung besteht darin, ein vorab beschichtetes Blech zur Herstellung der Rückwand und der Seitenwände, die das Mantelteil des Schaltschankgehäuses bilden, zu verwenden, wobei die offenen Schnittkanten des beschichteten Bleches durch die Boden- und die Deckwand abgedeckt werden. Es ist somit in vorteilhafter Weise kein zusätzlicher Beschichtungsschritt nach dem Zusammenfügen der Wände oder während der Herstellung des Schaltschrankgehäuses notwendig.

Das Mantelteil des Schaltschrankes ist daher durch das U-förmig gebogene Blech einstückig ausgebildet. Durch das direkte Anschließen oder Anordnen der Boden- und der Deckwand an das U-förmig gebogene Blech und die nach innen in den nichtsichtbaren Bereich gebogenen Schnittkanten sind in vorteilhafter Weise keine Schnittkanten des vorbeschichteten Bleches sichtbar. Ebenso werden Eckbereiche verhindert, an denen zwei Schnittkanten zusammenlaufen und zusätzliche Biegeradien weitere Schnittkanten sichtbar freilegen.

Erfindungsgemäß sind kritische Eckbereiche ohne Abkantung stumpf gegen die Decken- oder Bodenwand gestoßen, so dass die dort am Mantelteil vorgesehenen Schnittkanten nicht sichtbar sind.

Erfindungsgemäß ist die Bodenwand und die Deckwand mit dem U-förmig gebogenen Blech wieder beziehungsweise reversibel lösbar verbunden, insbesondere verrastet. Der Schaltschrank ist somit auseinandernehmbar und wiedermontierbar, wodurch dessen Flexibilität und Einsatzmöglichkeiten insgesamt erhöht ist.

Demnach sind die Bodenwand- und die Deckwand, mit dem Mantelteil verrastet beziehungsweise verrastbar.

Dabei ist vorgesehen, dass das Mantelteil sowie Boden- und Deckwand entsprechend aufeinander angepasste Rastmittel aufweisen, beispielsweise Rasthaken oder -nasen sowie dazu komplementäre Rastösen oder Ausnehmungen. Das erfindungsgemäße Schaltschrankgehäuse ist in vorteilhafter Weise einfacher zu fertigen als bekannte Gehäuse des Stands der Technik, da auf das nachträgliche Beschichtung des Schaltschrankgehäuses verzichtet werden kann.

Erfindungsgemäß ist/sind die Rückwand und/oder die Seitenwände an der Innenseite zumindest teilweise elektrisch isoliert. Der Isolationswiderstand des Schaltschrankes ist somit in vorteilhafter Weise erhöht. Die elektrische Isolation ist aus Spezialkeramik mit Aluminiumoxidanteil, Steatit, Porzellan, Glas, glasfaserverstärktem Kunststoff oder hydrophoben Kunststoffen ausgeführt.

Die Aufgabe wird außerdem gelöst durch ein Verfahren zur Fertigung des Schaltschrankgehäuses gemäß Anspruch 3.

In vorteilhafter Weise kann auf das nachträgliche Beschichten des Bleches, insbesondere an den Kanten, durch das erfindungsgemäße Fertigungsverfahren verzichtet werden. Die Vorteile dieses Verfahrens sind den Ausführungen zu dem unabhängigen Anspruch und den abhängigen Ansprüchen zu entnehmen.

Weitere vorteilhafte Erfindungsvarianten und vorteilhafte Ausgestaltungen sind den weiteren Ansprüchen und der nachfolgenden Beschreibung zu entnehmbar.

Anhand des in der Zeichnung dargestellten Ausführungsbeispiels sollen die Erfindung, weitere Varianten und weitere Vorteile näher beschrieben werden.

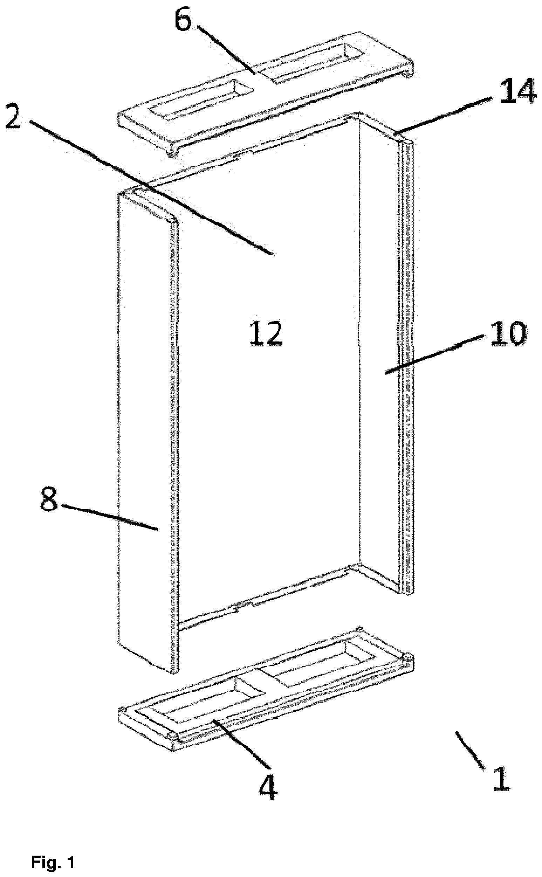

Fig. 1 zeigt einen exemplarischen Schaltschrank.

Fig. 1 zeigt einen exemplarischen Schaltschrank 1, welcher aus einer Rückwand 2, einer Deckwand 6 und einer Bodenwand 4 gebildet ist. Die Rückwand 2 ist aus einem Blech 12 gefertigt, welches U-förmig gebogen ist. Das Blech 12 weist umlaufende Kanten 14 auf, welche nach innen gebogen sind. Die umlaufenden Kanten 14 sind durch die Deckwand 6 und die Bodenwand 4 abgedeckt. Der Schaltschrank 1 weist somit keine nach außen offenen Kanten auf.

Die Erfindung betrifft einen Schaltschrank, insbesondere einen Zähler- und/oder Verteilerschrank, mit einem Schrankgehäuse aus Blech 12 und einer Innenauskleidung des Schrankgehäuses aus isolierendem Material, wobei das Schrankgehäuse aus vorbeschichtetem Blech 12 gefertigt ist.

Der Erfindung liegt somit die Aufgabe zugrunde, einen neuen Zähler- und/oder Verteilerschrank zu schaffen, bei welchem der überwiegende Teil des Schranks aus vorbeschichtetem Blech gefertigt ist und die fertigungsbedingten Schnittkanten abgedeckt sind.

Erfindungsgemäß ist das U-förmige Mantelteil aus vorbeschichtetem Blech gefertigt und wird mit den beiden stirnseitigen Deckelteilen verschlossen. Durch das direkte Anschließen der Deckelteile sind keine Schnittkanten des vorbeschichten Mantelteils zu sehen. Ebenso werden Eckbereiche verhindert, an denen zwei Schnittkanten zusammenlaufen und zusätzliche Biegeradien weitere Schnittkanten sichtbar freilegen. Alle übrigen Schnittkanten werden in den nichtsichtbaren Bereich nach innen gebogen. Kritische Eckbereiche sind ohne Abkantung stumpf gegen das Kopfteil gestoßen, so dass die Schnittkanten nicht sichtbar sind.

Die stirnseitigen Kopfteile sind durch die Deckwand 6 und die Bodenwand 4 gebildet, wobei diese mit dem Mantelteil verrastet sind.

In der dargestellten Figur ist somit ein, nach der erfindungsgemäßen Methode gefertigter, Zähler-/ Verteilerschrank dargestellt. Das vorbeschichtete Blech ist in eine U-Form gebogen und bildet den Blechmantel. Der Mantel ist mit zwei Deckelteilen, vorzugsweise aus isolierendem Material verschlossen. Somit ist ein komplettes Schrankgehäuse gebildet.

Die Erfindung betrifft daher einen Zähler- und/oder Verteilerschrank mit einem Schrankgehäuse aus Blech und einer Innenauskleidung des Schrankgehäuses aus isolierendem Material, wobei das Schrankgehäuse aus vorbeschichtetem Blech gefertigt wird.

### Bezugszeichenliste

- 1: Schaltschrankgehäuse
- 2: Rückwand
- 4: Bodenwand
- 6: Deckwand
- 8: Erste Seitenwand
- 10: Zweite Seitenwand
- 12: Blech
- 14: Kante

## Patentansprüche

1. Schaltschrankgehäuse (1) mit mindestens einer Rückwand (2), einer Bodenwand (4), einer Deckwand (6) und mindestens zwei Seitenwänden (8, 10),
wobei:
• ein Mantelteil des Schaltschrankes, das aus der Rückwand (2) und den Seitenwänden (8, 10) gebildet wird, aus einem vorbeschichteten U-förmig gebogenen Blech (12) mit einer nach innen gebogenen umlaufenden Schnittkante (14) einstückig ausgebildet ist;
• die Boden- (4) und die Deckwand (6) so mit dem U-förmig gebogenen Blech (12) verbunden sind, dass jeweilige Schnittkanten (14) verdeckt sind; und wobei durch das direkte Anschließen oder Anordnen der Boden- und der Deckwand an das U-förmig gebogene Blech und durch die nach innen in einen nichtsichtbaren Bereich gebogenen jeweiligen Schnittkanten (14) keine Schnittkanten des vorbeschichteten Bleches sichtbar sind;
• kritische Eckbereiche ohne Abkantung stumpf gegen die Decken- (6) oder Bodenwand (4) stoßen, so dass die dort am Mantelteil vorgesehenen Schnittkanten nicht sichtbar sind;
• die Rückwand (2) und/oder die Seitenwände (8, 10) an der Innenseite mit einer Innenauskleidung aus isolierendem Material zumindest teilweise elektrisch isoliert ist/sind;
• der Mantelteil mit der Bodenwand (4) und der Deckwand aus jeweils isolierendem Material verschlossen ist;
• die Bodenwand (4) und die Deckwand (6) mit dem U-förmig gebogenen Blech verrastet wiederlösbar verbunden sind; und
• der Mantelteil sowie Boden- (4) und Deckwand (6) entsprechend aufeinander angepasste Rastmittel aufweisen, beispielsweise Rasthaken oder -nasen sowie dazu komplementäre Rastösen oder Ausnehmungen.

2. Schaltschrankgehäuse (1) nach Anspruch 1, **dadurch gekennzeichnet, dass** die elektrische Isolation aus einer Spezialkeramik mit Aluminiumoxidanteil oder Steatit oder Porzellan oder Glas oder glasfaserverstärktem Kunststoff oder hydrophoben Kunststoffen ausgeführt ist.

3. Verfahren zur Fertigung eines Schaltschrankgehäuses (1) nach einem der Ansprüche 1 oder 2, **gekennzeichnet durch** die folgenden Schritte:
• Biegen eines vorbeschichteten Bleches (12) in U-Form;
• Biegen der umlaufenden Schnittkante (14) des Bleches (12) nach innen; Verbinden der Bodenwand (4) und der Deckwand (6) mit dem U-förmig gebogenen Blech, so dass die nach innen gebogenen jeweiligen Schnittkanten verdeckt sind;
und wobei durch ein direktes Anschließen oder Anordnen der Boden- (4) und der Deckwand (6) an das U-förmig gebogene Blech und durch die nach innen in einen nichtsichtbaren Bereich gebogenen jeweiligen Schnittkanten (14) keine Schnittkanten des vorbeschichteten Bleches sichtbar sind.

## Claims

1. Switchboard enclosure (1) with at least one rear panel (2), one base panel (4), one top panel (6) and at least two side panels (8, 10), wherein:
- a covering part of the switchboard enclosure, which is formed from the rear panel (2) and the side panels (8, 10), is formed in one piece from a pre-coated sheet metal (12) bent in a U-shape with an inwardly bent peripheral cut edge (14);
- the bottom panel (4) and the top panel (6) are connected to the U-shaped bent sheet metal (12) in such a way that respective cut edges (14) are covered; and wherein no cut edges of the pre-coated sheet metal are visible due to the direct connection or arrangement of the bottom panel and the top panel to the U-shaped bent sheet metal and due to the circumferential cut edges (14) bent inwards into the non-visible area;
- critical corner areas without bending are butted against the top panel (6) or base panel (4) , so that the cut edges provided there on the covering part are not visible;
- the rear panel (2) and/or the side panels (8, 10) is/are at least partially electrically insulated on the inside with an inner lining of insulating material;
- the covering part is closed with the base panel (4) and the top panel, each of which is made of insulating material
- the base panel (4) and the top panel (6) are detachably connected to the U-shaped bent sheet; and
- the covering part as well as the bottom wall (4) and the top panel (6) have correspondingly adapted latching means, for example latching hooks or protrusions as well as complementary latching lugs or recesses.

2. Switchboard enclosure (1) according to claim 1, **characterized in that** the electrical insulation is made of a special ceramic with aluminum oxide content or steatite or porcelain or glass or glass-fiber-reinforced plastic or hydrophobic plastics.

3. Method of producing a switchboard enclosure (1) according to any one of claims 1 or 2, **characterized by** the following steps:
- bending a pre-coated sheet (12) into a U-shape;
- bending the circumferential cut edge (14) of the sheet metal (12) inwards; joining the base panel (4) and the top panel (6) to the sheet bent into a U-shape so that the inwardly bent respective cut edges are concealed;
and wherein by directly connecting or arranging the base panel (4) and the top panel (6) to the U-shaped bent sheet and by the circumferential cut edges (14) bent inwardly into the non-visible area, no cut edges of the pre-coated sheet are visible.

## Revendications

1. Boîtier d'armoire électrique (1) comprenant au moins une paroi arrière (2), une paroi de fond (4), une paroi de dessus (6) et au moins deux parois latérales (8, 10), dans lequel :
- une partie d'enveloppe de l'armoire électrique, qui est formée par la paroi arrière (2) et les parois latérales (8, 10), est configurée d'une seule pièce à partir d'une tôle pré-revêtue pliée en forme de U (12), comprenant une arête de coupe (14) périphérique pliée vers l'intérieur ;
- la paroi de fond (4) et la paroi de dessus (6) sont reliées à la tôle pliée en forme de U (12) de telle sorte que les arêtes de coupe (14) respectives sont masquées ; et dans lequel, du fait du raccordement ou de l'agencement direct de la paroi de fond et de la paroi de dessus au niveau de tôle pliée en forme de U et du fait des arêtes de coupe respectives (14) pliées vers l'intérieur dans une zone non visible, aucune arête de coupe de la tôle pré-revêtue n'est visible ;
- les zones d'angle critiques sont en butée contre la paroi de dessus (6) ou la paroi de fond (4) sans repliage, de telle sorte que les arêtes de coupe prévues à cet endroit sur la partie d'enveloppe ne sont pas visibles ;
- la paroi arrière (2) et/ou les parois latérales (8, 10) sont au moins partiellement isolées électriquement sur le côté intérieur avec un revêtement intérieur en matériau isolant ;
- la partie d'enveloppe est fermée avec la paroi de fond (4) et la paroi de dessus, chacune en matériau isolant ;
- la paroi de fond (4) et la paroi de dessus (6) sont reliées de manière détachable par encliquetage à la tôle pliée en forme de U ; et
- la partie d'enveloppe ainsi que la paroi de fond (4) et la paroi de dessus (6) présentent des moyens d'encliquetage adaptés les uns aux autres, par exemple des crochets ou des ergots d'encliquetage ainsi que des œillets d'encliquetage ou des évidements complémentaires à ceux-ci.

2. Boîtier d'armoire électrique (1) selon la revendication 1, **caractérisé en ce que** l'isolation électrique est réalisée en une céramique spéciale comprenant une fraction d'oxyde d'aluminium ou de la stéatite ou de la porcelaine ou du verre ou une matière plastique renforcée par des fibres de verre ou des matières plastiques hydrophobes.

3. Procédé de fabrication d'un boîtier d'armoire électrique (1) selon l'une quelconque des revendications 1 ou 2, **caractérisé par** les étapes suivantes :
- le pliage d'une tôle pré-revêtue (12) en forme de U ;
- le pliage vers l'intérieur de l'arête de coupe périphérique (14) de la tôle (12) ;
- la liaison de la paroi de fond (4) et de la paroi de dessus (6) à la tôle pliée en forme de U, de telle sorte que les arêtes de coupe respectives pliées vers l'intérieur sont masquées ;
et dans lequel, du fait d'un raccordement ou d'un agencement direct de la paroi de fond (4) et de la paroi de dessus (6) au niveau de la tôle pliée en forme de U et du fait des arêtes de coupe respectives (14) pliées vers l'intérieur dans une zone non visible, aucune arête de coupe de la tôle pré-revêtue n'est visible.
